# EUROPEAN PATENT APPLICATION

(11) **EP 3 940 508 A1**
(43) Date of publication of application: **19.01.2022**
(21) Application number: 20808633.0
(22) Date of filing: 27.04.2020
(51) Int. Cl.: G06F 3/01, G06F 3/041, G06F 3/0484

(54) **INPUT SYSTEM, PRESENTATION DEVICE, AND CONTROL METHOD**

(30) Priority: 17.05.2019 JP 2019093979; 06.04.2020 JP 2020068557
(71) Applicant: Kabushiki Kaisha Tokai Rika Denki Seisakusho, Aichi 480-0195 (JP)
(72) Inventor: MITSUI, Yuji, Niwa-gun, Aichi 480-0195 (JP); TAKAI, Toshihito, Niwa-gun, Aichi 480-0195 (JP); ARAYA, Takao, Niwa-gun, Aichi 480-0195 (JP); OHNISHI, Takeshi, Niwa-gun, Aichi 480-0195 (JP); NOMURA, Keiji, Niwa-gun, Aichi 480-0195 (JP); NAKANE, Keita, Niwa-gun, Aichi 480-0195 (JP); SENGOKU, Takakazu, Niwa-gun, Aichi 480-0195 (JP); IMAI, Tomomi, Niwa-gun, Aichi 480-0195 (JP)
(74) Representative: TBK
(86) International application number: PCT/JP2020/017882
(87) International publication number: WO 2020/235304

(57) **Abstract**

[Object] To provide a structure capable of improving usability related to an input.

[Solution] An input system comprising: an input unit configured to receive an input; a presentation unit configured to present a response; and a control unit configured to control the presentation unit such that the response is presented in accordance with the input to the input unit.

## Description

### Technical Field

The present invention relates to an input system, a presentation device, and a control method.

### Background Art

In recent years, with advances in information processing devices such as automobiles and smartphones, technologies for input devices receiving inputs of information to the information processing devices have been actively developed. For example, the following Patent Literature 1 discloses a technology for miniaturizing switches by forming contact mechanisms compactly.

### Citation List

### Patent Literature

Patent Literature 1: JP 2017-124726A

### Summary of Invention

### Technical Problem

In the input device disclosed in the foregoing Patent Literature 1, however, information is merely received and there is room for improvement in usability.

Accordingly, the present invention has been devised and an objective of the present invention is to provide a structure capable of improving usability related to an input.

### Solution to Problem

To solve the above described problem, according to an aspect of the present invention, there is provided an input system comprising: an input unit configured to receive an input; a presentation unit configured to present a response; and a control unit configured to control the presentation unit such that the response is presented in accordance with the input to the input unit.

The control unit may perform control such that a response is presented in accordance with whether an operation on an operation target based on the input to the input unit is effective.

The control unit may perform control such that a response is presented in accordance with an input method to the input unit.

The control unit may perform control such that a response is presented in accordance with an operation target operated based on the input to the input unit.

The control unit may perform control such that a response is presented in accordance with whether an operation result on the operation target based on the input to the input unit satisfies a predetermined condition

The presentation unit may present a sense of touch to a user via the input unit as the response to the input to the input unit.

The control unit may receive a setting of a correspondence relation between the input to the input unit and the response to be presented.

To solve the above described problem, according to another aspect of the present invention, there is provided a presentation device comprising: a presentation unit configured to present a response based on control information for giving an instruction to output the response in accordance with an input to an input unit.

To solve the above described problem, according to another aspect of the present invention, there is provided a control method comprising: controlling a presentation unit such that a response is presented in accordance with an input to an input unit.

### Advantageous Effects of Invention

According to the above-described present invention, it is possible to provide a structure capable of improving usability related to an input.

### Brief Description of Drawings

FIG. 1 is a block diagram illustrating an example of a logical structure of an input system according to an embodiment of the present invention.
FIG. 2 is a diagram illustrating an application example of the input system according to the embodiment.
FIG. 3 is a flowchart illustrating an example of a flow of a feedback presentation process performed in the input system according to the embodiment.

### Description of Embodiments

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### <<1. Exemplary configuration>>

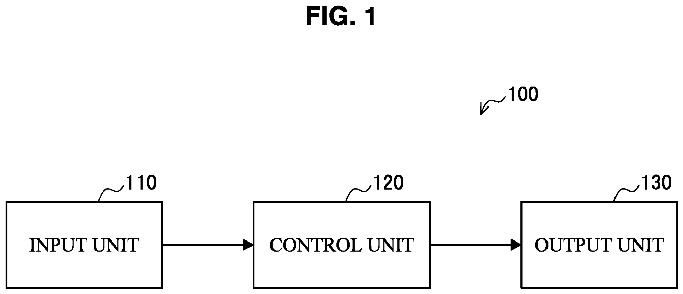

FIG. 1 is a block diagram illustrating an example of a logical structure of an input system 100 according to an embodiment of the present invention. As illustrated in FIG. 1, the input system 100 includes an input unit 110, a control unit 120, and an output unit 130.

The input unit 110 has a function of receiving an input of information from a user. The input unit 110 can be configured by, for example, a sensor such as a touch sensor, a pressure sensor, an inertial sensor, a biological sensor, a button, a keyboard, a switch, a camera, and a microphone or a combination of these sensors. The input unit 110 outputs information indicating input content to the control unit 120.

The control unit 120 has a function of controlling an overall operation of the input system 100. The control unit 120 is configured by, for example, an electronic circuit such as a central processing unit (CPU) and a microprocessor. The control unit 120 controls the output unit 130 such that a response (hereinafter also referred to as feedback) is output in accordance with an input. More specifically, the control unit 120 generates control information for giving an instruction to output feedback in accordance with an input to the input unit 110 and outputs the control information to the output unit 130. In addition, the control unit 120 can perform and control a process in accordance with input information, such as playing music in response to an input for giving an instruction to play music, for example.

The output unit 130 has a function of outputting information to a user. The output unit 130 is configured as an output device that outputs a stimulus perceived by the user of at least one of a visual presentation unit, an auditory presentation unit, a tactile presentation unit, a gustatory presentation unit, and an olfactory presentation unit, which will be described below. The visual presentation unit has a function of performing visual presentation (that is, outputting a stimulus perceived by the sense of vision). The visual presentation unit is configured by, for example, a display device such as a display or a projector capable of outputting an image, an illumination device such as a light-emitting diode (LED) light capable of emitting light, and a control device for ambient light, such as a window blind. The auditory presentation unit has a function of performing auditory presentation (that is, outputting a stimulus perceived by the sense of hearing). The auditory presentation unit is configured by a sound output device such as a speaker, an earphone, or a bone conduction earphone. The tactile presentation unit has a function of performing tactile presentation (that is, outputting a stimulus perceived the sense of touch). The tactile presentation unit is configured by, for example, a vibration device such as an eccentric motor and a voice coil, a blower device that generates wind, a temperature changing device that outputs a hot sensation/cold sensation, and a device that outputs an electrical stimulus. The gustatory presentation unit has a function of performing gustatory presentation (that is, outputting a stimulus perceived by the sense of taste). The gustatory presentation unit is configured by, for example, a device that emits a chemical substance and a device that outputs an electrical stimulus to a gustatory organ. The olfactory presentation unit has a function of performing olfactory presentation (that is, outputting a stimulus perceived by the sense of smell). The olfactory stimulation unit is configured by, for example, a device that emits a fragrance. The output unit 130 outputs feedback in accordance with an input to the input unit 110 based on control information output from the control unit 120.

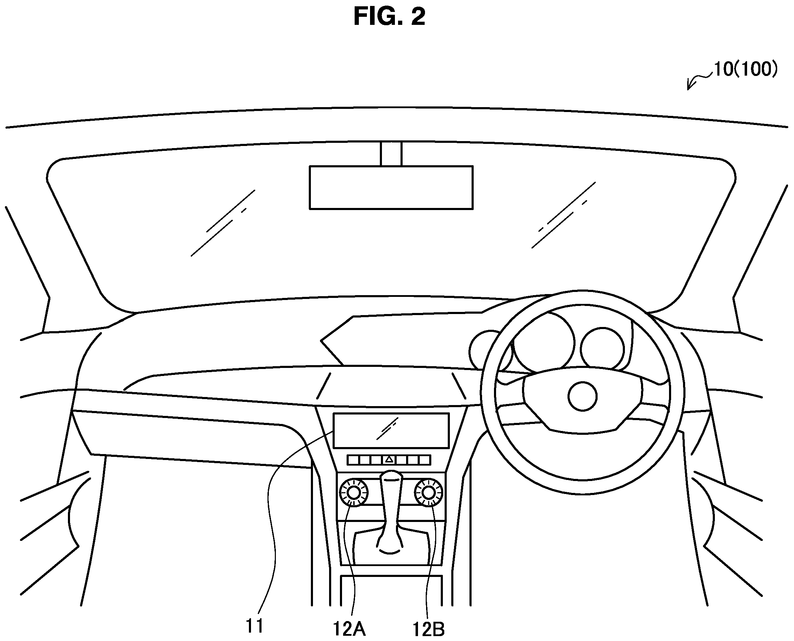

It is conceivable that the input system 100 can be applied to various devices. Hereinafter, an example in which the input system 100 is applied to, for example, a vehicle will be described. FIG. 2 is a diagram illustrating an application example of the input system 100 according to the embodiment. In the example illustrated in FIG. 2, the input system 100 is applied to a vehicle 10 and a user performing an input to the input unit 110 is a person who enters the vehicle 10.

In this example, the input unit 110 may include a display 11 and rotary switches 12 (12A and 12B). The display 11 includes, for example, a liquid crystal panel and sensors that detect a touch and a pressure of an operator such as a finger on the liquid crystal panel, and display an image and receive an input to the displayed image. On the display 11, a music player, navigation information, and the like are displayed and inputs for operating various operation targets are performed. Here, the operation targets are, for example, targets operated in accordance with an input to the input unit 110, such as a setting of a volume to play music, a choice of a destination, and settings of a temperature and a wind amount of an air conditioner (AC). In the image displayed on the display 11, a portion for receiving an operation on an operation target, such as a volume adjustment button, is also referred to as an operation user interface (UI). On the other hand, the rotary switches 12 have cylindrical shapes, are configured to be rotatable about central axes which are rotational axes, and receive inputs of information in accordance with rotational amounts. Further, the rotary switch 12 includes a sensor that detects a pressure in a rotational axis direction, and switching of an operation target in response to a pushing operation in the rotational axis direction of the rotary switch 12 is input. For example, the rotary switch 12 switches an operation target between a temperature and a wind amount in response to a pushing operation and adjusts a value of the temperature or a value of the wind amount in accordance with a rotational amount.

The control unit 120 is configured as, for example, an electronic control unit (ECU) (not illustrated).

The output unit 130 can be configured as any of various devices in the vehicle 10. As an example of the output unit 130, a tactile presentation unit such as a vibration device can be provided on a portion capable of coming in contact with the user, such as the display 11, the rotary switches 12, the surface of a seat, a backrest portion, an armrest portion, a seat belt, a handle, or a floor surface. An AC is also an example of the tactile presentation unit that outputs hot or cold wind. As another example, the display 11 and an illumination device (not illustrated) may function as a visual presentation unit or a speaker (not illustrated) may function as an auditory presentation unit. The input system 100 may be configured by a single device (that is, the vehicle 10) or may be configured by a plurality of devices. For example, a wearable device such as a terminal provided in a shirt and a smartwatch, a cushion touched by the body of a user, a terminal device such as a smartphone, or a vehicleexterior device such as a traffic signal may function as the output unit 130.

### <<2. Technical features>>

### (1) Feedback in accordance with input

The input system 100 presents feedback in accordance with an input to the input unit 110. Specifically, the input system 100 presents different feedback in accordance with input content to the input unit 110. For example, the input system 100 presents different feedback for each of a positional relation between an operation UI displayed on the display 11 and a touch position of the user, a duration of a touch, and an intensity of the touch. The input system 100 presents different feedback for each of presence or absence of a touch on the rotary switch 12, presence or absence of a pushing operation, and a rotational amount. Feedback is presented in accordance with an input. Accordingly, for example, the user can easily recognize input content performed by the user himself or herself without viewing indication of the display 11, a rotational amount of the rotary switch 12, or the like.

Feedback can be presented as a stimulus to any of one or more kinds of sensory organs. Here, for example, the sense of touch is assumed to be presented. When a vibration is presented as an example of presentation of the sense of touch, the input system 100 may control presence or absence of a vibration, an amplitude, a frequency, or a combination thereof in accordance with an input to the input unit 110. When the input unit 110 is the rotary switch 12, the input system 100 may control a load necessary for rotating the rotary switch 12 in addition to or instead of the control of presence or absence of a vibration, an amplitude, a frequency, or a combination thereof. With such a configuration, it is possible to present various operational sensations to the user.

The output unit 130 may present feedback to the user through the input unit 110. For example, the output unit 130 vibrates the display 11 in accordance with an input to the display 11. As another example, the output unit 130 vibrates the rotary switch 12 or increases or decreases a load necessary for rotating the rotary switch 12 in accordance with an input to the rotary switch 12. Thus, since feedback can be presented directly to the body (for example, a finger) of the user in contact with the input unit 110, the user can recognize feedback to the input more intuitively. On the other hand, the output unit 130 may present feedback to the user without involving the input unit 110. For example, the output unit 130 vibrates a handle, a seat, or the like in accordance with the input to the display 11 and the rotary switch 12. Thus, it is possible to design various types of feedback.

### (2) Example of control content of feedback

The input system 100 may present feedback in accordance with whether an operation on an operation target based on an input to the input unit 110 is effective. The input system 100 presents a different vibration in accordance with whether the operation on the operation target is effective. For example, the input system 100 outputs a vibration when the operation on the operation target is effective, and does not output a vibration when the operation on the operation target is ineffective. Thus, the user can easily recognize whether the operation on the operation target is effective or ineffective in accordance with presence or absence of the feedback.

A specific example of the feedback in accordance with whether the operation on the operation target is effective will be described. For example, in a touch operation mode in which an operation target is operated through touching on the operation UI displayed on the display 11, the operation is effective when a touch position overlaps the operation UI. Otherwise, the operation is ineffective. In this case, the input system 100 may output a vibration when the touch operation is effective, and may not output a vibration when the touch operation is ineffective. As another example, in a long-pressing operation mode in which an operation target is operated by continuing a touch on the operation UI displayed on the display 11 (also referred to as long-pressing), when a touch position continuously overlaps the operation UI, the operation is effective. Otherwise, the operation is ineffective. In this case, the input system 100 continuously outputs a vibration during a period in which the long-pressing is effective, and stops the vibration when, for example, the touch position is shifted and the long-pressing is ineffective. Further, when the long-pressing is performed for a predetermined time and the indication of the display 11 is switched or a long-pressing target is determined, different vibrations may be output at a long-pressing time until a predetermined time elapses or a switching or determination time when the predetermined time elapses. As another example, for the rotary switch 12, whether an operation is effective or ineffective may be determined in accordance with whether a rotational amount exceeds a predetermined value, an operation may be considered to be effective and a vibration may be output when the rotational amount is large, and the operation may be considered to be ineffective and a vibration may not be output when the rotation is minute. As another example of the rotary switch 12, in rotation within an operable range (for example, between a settable upper limit and lower limit of a temperature in the AC), an operation may be considered to be effective and a vibration may be output. In rotation outside of the operable range, an operation may be considered to be ineffective and a vibration may not be output. In this case, the input system 100 presents different feedback in accordance with whether an operation on an operation target is effective. Thus, the user can intuitively recognize whether the operation on the operation target is effective.

The input system 100 may present feedback in accordance with an input method to the input unit 110. For example, the input system 100 presents different feedback for each input method such as a pinch operation, a swipe operation, or a slide operation on the operation UI displayed on the display 11. Thus, the user can easily recognize an input method recognized by the input system 100.

The input system 100 may present feedback in accordance with an operation target operated based on an input to the input unit 110. For example, the input system 100 presents feedback in accordance with the touched operation UI and presents feedback in accordance with the operation target of the rotary switch 12 switched through a pushing operation. Thus, the user can easily recognize the operation target.

The input system 100 may present feedback in accordance with whether an operation result of an operation target based on an input to the input unit 110 satisfies a predetermined condition. For example, the input system 100 presents a specific vibration when the operation result of a temperature and a wind amount of the AC becomes a preset temperature and wind amount preferred by the user. In this case, the user can easily recognize whether a setting of the temperature and the wind amount preferred by the user is successful in accordance with presentation of the specific vibration.

### (3) User setting

The input system 100 may receive a setting of a correspondence relation between the input to the input unit 110 and feedback to be presented. For example, the input system 100 receives a setting of whether an operation on an operation target is effective, each input method, each operation target, and content of feedback (for example, presence or absence of vibration, an amplitude, a frequency, and the like) when the operation result satisfies the above-described predetermined condition. As another example, the input system 100 may receive the setting of the above-described predetermined condition. The user may perform the setting. In this case, the user can receive a presentation of feedback suitable for a preference of the user. The setting may be automatically performed by the input system 100 by tracking and learning operation content of the user.

### (4) Flow of process

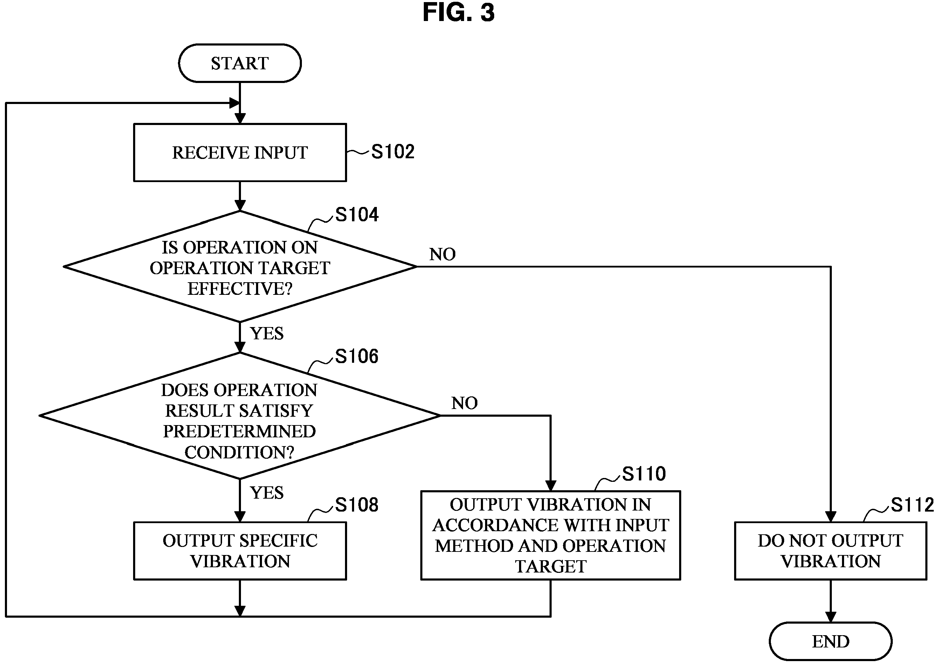

FIG. 3 is a flowchart illustrating an example of a flow of the feedback presentation process performed in the input system 100 according to the embodiment. As illustrated in FIG. 3, the input unit 110 first receives an input (step S102). Subsequently, the control unit 120 determines whether an operation on an operation target is effective (step S104). When it is determined that the operation on the operation target is effective (YES in step S104), the control unit 120 determines whether an operation result satisfies a predetermined condition (step S106). When it is determined that the operation result satisfies the predetermined condition (YES in step S106), the output unit 130 outputs a specific vibration under the control of the control unit 120 (step S108). Thereafter, the process returns to step S102. Conversely, when it is determined that the operation result does not satisfy the predetermined condition (NO in step S106), the output unit 130 outputs a vibration in accordance with an input method and the operation target under the control of the control unit 120 (step S110). Thereafter, the process returns to step S102 again. Conversely, when it is determined in step S104 that the operation on the operation target is ineffective (NO in step S104), the output unit 130 does not output the vibration under the control of the control unit 120 (step S112). Thereafter, the process ends.

### (5) Advantageous effects

As described above, according to the present invention, feedback is presented in accordance with an input. Thus, the user can easily recognize an operation state indicating whether an operation on an operation target is successful and what the operation target is. Thus, for example, when the user is a driver of the vehicle 10, the user can recognize an operation state based on the feedback without viewing the display 11 and the rotary switches 12, and thus can concentrate on driving. That is, according to the input system 100 according to the embodiment, it is possible to reduce a behavior such as inattentive driving. Even for an operation target on which it is difficult to physically sense an operation result immediately after an operation such as temperature adjustment is performed, it is possible to recognize an operation result immediately in accordance with feedback. Thus, usability related to an input is improved.

The effect of the improvement in the usability is enhanced when the user is accustomed to the feedback. Specifically, when the user is accustomed to the feedback, the user can easily recognize at least one of success or failure of an operation based on whether the feedback to which the user is accustomed for the input is presented and operation content when a presentation aspect of the sense of touch is changed for each operation. The effect of the improvement in the usability is also enhanced when the user is in an irregular state. Specifically, even in a situation in which it is difficult to view the display 11 and the rotary switches 12 because the user feels sick or an illumination mechanism inside the vehicle 10 is broken, the user can easily recognize success or failure of an operation based on the feedback.

### <<3. Supplements>>

Heretofore, preferred embodiments of the present invention have been described in detail with reference to the appended drawings, but the present invention is not limited thereto. It should be understood by those skilled in the art that various changes and alterations may be made without departing from the spirit and scope of the appended claims.

In addition to the feedback described in the foregoing embodiment, various types of feedback presented by the input system 100 in accordance with an input to the input unit 110 are conceivable. Hereinafter, other examples of the feedback presented by the input system 100 will be described.

When a pinch-in or pinch-out operation which is an operation of expanding or contracting a map is performed with the input unit 110, the control unit 120 may control the output unit 130 such that tactile presentation and auditory presentation indicating the pinch-in or pinch-out operation are performed. The pinch-in or pinch-out operation is an operation of changing an interval between touch positions of two fingers and the input unit 110. More specifically, the pinch-in operation is an operation of shortening the interval and the pinch-out operation is an operation of enlarging the interval.

When a swipe operation is performed with the input unit 110, the control unit 120 may control the output unit 130 such that a tactile presentation and auditory presentation indicating the swipe operation are performed. The swipe operation is an operation of changing a touch position of one finger with the input unit 110 in a state in which the finger touches the input unit 110.

When a scroll or catch operation of a list scroll bar is performed with the input unit 110, the control unit 120 may control the output unit 130 such that tactile presentation and auditory presentation indicating the scroll or catch operation are performed. When an operation of removing a finger from the list scroll bar is input to the input unit 110, the control unit 120 may control the output unit 130 such that auditory presentation in accordance with the removal of the finger is performed. The list scroll bar is an operation area in which a range of a display target in a list which is a list of a plurality of display items is moved. The list scroll bar includes a body in which a straight shape is displayed and a knob located in a partial region of the body. The scroll operation is an operation of moving the position of the knob in the body. Through the scroll operation, a range which is a display target in the list is moved, that is, scrolled. The catch operation is an operation of stopping movement of a position of the knob of the body.

When an operation of selecting a specific location on a map is performed with the input unit 110, the control unit 120 may control the output unit 130 such that tactile presentation and auditory presentation indicating a specific location are performed. Examples of the specific location are a sea and a river. For example, the control unit 120 may control the output unit 130 such that a sound and a vibration are presented like water splashing in a sea or a river.

When an operation of inputting text is performed with the input unit 110, the control unit 120 may control the output unit 130 such that a sound and a vibration are presented like text being written with a pen.

When an operation of moving an icon indication is performed with the input unit 110, the control unit 120 may control the output unit 130 such that tactile presentation and auditory presentation indicating the operation are performed. Certain data corresponds to the icon indication and the icon indication is an indication representing a usage, a function, or the like of the corresponding data in a figure or a pattern.

When an operation of inserting an icon indication into a folder such as a data folder or a trash folder is performed with the input unit 110, the control unit 120 may control the output unit 130 such that a sound and a vibration like a plop occurring at the time of dropping of a thing into a box are presented. An operation of inserting an icon indication into a folder is, for example, a drag-and-drop operation. The drag-and-drop operation is an operation of moving an operation position to a target position while keeping the icon indication selected after an operation of selecting the icon indication is performed. Through the drag-and-drop operation, the icon indication is moved to the target position.

In the foregoing embodiment, an example in which feedback is output in the case in which an operation on an operation target is effective with regard to the feedback in accordance with whether the operation on the operation target is effective has been described, but the present invention is not limited to this example. For example, the control unit 120 may control the output unit 130 such that tactile presentation and auditory presentation indicating that the operation on the operation target is ineffective are performed when the operation on the operation target is ineffective.

When an operation of starting or ending an application is performed with the input unit 110, the control unit 120 may control the output unit 130 such that tactile presentation and auditory presentation indicating that the application starts or ends are performed.

When an operation of starting or ending a sound recognition mode is performed with the input unit 110, the control unit 120 may control the output unit 130 such that tactile presentation and auditory presentation indicating that the sound recognition mode starts or ends are performed. The sound recognition mode is a mode in which a sound collection function of converting a sound which is an aerial vibration into an electrical sound signal and an analysis function of recognizing content of the sound by analyzing the sound signal are activated.

When a pin sticking operation on a map is performed with the input unit 110, the control unit 120 may control the output unit 130 such that tactile presentation and auditory presentation indicating the pin sticking operation are performed. The pin sticking operation is an operation of setting a pin indicating a specific point such as a favorite point on a map.

When an operation of selecting a pin set on the map is performed with the input unit 110, the control unit 120 may control the output unit 130 such that tactile presentation and auditory presentation indicating the selection of the pin are performed.

When an operation of drawing a picture is performed with the input unit 110, the control unit 120 may control the output unit 130 such that a sound and a vibration occurring at the time of drawing a picture with a pen or a brush are presented.

When an operation of touching a specific object with a hand is performed with the input unit 110, the control unit 120 may control the output unit 130 such that tactile presentation and auditory presentation are performed in accordance with the object touched with the hand. For example, when a handrail in a zoo is held with a hand, the control unit 120 may control the output unit 130 such that a vibration involved in walking of an animal and growling of the animal are presented. As another example, when a picture of an insect drawn in a picture book is touched with a hand, the control unit 120 may control the output unit 130 such that the sense of touch like touching the insect with the hand and a buzzing sound of the insect are presented.

When an operation of viewing a live music performance in a concert hall is performed with the input unit 110, the control unit 120 may control the output unit 130 such that sounds of the live music performance, sounds of spectators in the concert hall, and vibrations of the spectators dancing in the concert hall are presented.

When an operation of locking or unlocking a door of the vehicle is performed with the input unit 110, the control unit 120 may control the output unit 130 such that tactile presentation and auditory presentation indicating unlocking or locking are performed. The operation of locking or unlocking the door of a vehicle can be realized through, for example, an operation from a smartphone or a touch operation on a door handle.

When an operation of setting an alarm is performed with the input unit 110, the control unit 120 may control the output unit 130 such that a vibration and a sound of the alarm at a set time are output.

The input unit 110 may be a mouse. When one of a plurality of buttons of the mouse is clicked, the control unit 120 may control the output unit 130 such that tactile presentation and auditory presentation in accordance with the clocked button are performed.

Other examples of the feedback presented by the input system 100 have been described above.

For example, in the foregoing embodiment, an example in which the present invention is applied to the vehicle 10 has been described, but applications of the present invention are not limited thereto. The present invention can be applied to any moving object that a user boards such as a ship or an airplane. The present invention is not limited to a moving object, but may be applied to any device such as a personal computer (PC), a smartphone, a smart speaker, a wearable device, or a smart key that includes an input device.

For example, in the foregoing embodiment, an example in which the sense of touch is presented as feedback has been described, but the present invention is not limited to this example. As feedback, any of the sense of vision, the sense of hearing, the sense of touch, the sense of taste, and the sense of smell or a combination thereof may be presented.

Each device described in the present specification may be realized by a single device, or some or all of the devices may be realized by separate devices. For example, the input system 100 illustrated in FIG. 1 may be configured as a single information processing device or may be included in a device such as a server in which the control unit 120 is connected to the input unit 110 and the output unit 130 via a network or the like in the exemplary functional configurations of the input system 100.

Note that, a series of processes performed by the devices described in this specification may be achieved by any of software, hardware, and a combination of software and hardware. A program that configures software is stored in advance in, for example, a recording medium (non-transitory medium) installed inside or outside the devices. In addition, for example, when a computer executes the programs, the programs are read into random access memory (RAM), and executed by a processor such as a CPU. The recording medium may be a magnetic disk, an optical disc, a magneto-optical disc, flash memory, or the like. Alternatively, the above-described computer program may be distributed via a network without using the recording medium, for example.

Further, in the present specification, the processes described using the flowcharts and the sequence diagrams are not necessarily executed in the order illustrated in the drawings. Some processing steps may be executed in parallel. In addition, additional processing steps may be employed and some processing steps may be omitted.

### Reference Signs List

- 100: Input system
- 110: Input unit
- 120: Control unit
- 130: Output unit
- 10: Vehicle
- 11: Display
- 12: Rotary switch

## Claims

1. An input system comprising:
an input unit configured to receive an input;
a presentation unit configured to present a response; and
a control unit configured to control the presentation unit such that the response is presented in accordance with the input to the input unit.

2. The input system according to claim 1, wherein the control unit performs control such that a response is presented in accordance with whether an operation on an operation target based on the input to the input unit is effective.

3. The input system according to claim 1 or 2, wherein the control unit performs control such that a response is presented in accordance with an input method to the input unit.

4. The input system according to any one of claims 1 to 3, wherein the control unit performs control such that a response is presented in accordance with an operation target operated based on the input to the input unit.

5. The input system according to any one of claims 1 to 4, wherein the control unit performs control such that a response is presented in accordance with whether an operation result on the operation target based on the input to the input unit satisfies a predetermined condition

6. The input system according to any one of claims 1 to 5, wherein the presentation unit presents a sense of touch to a user via the input unit as the response to the input to the input unit.

7. The input system according to any one of claims 1 to 6, wherein the control unit receives a setting of a correspondence relation between the input to the input unit and the response to be presented.

8. A presentation device comprising:
a presentation unit configured to present a response based on control information for giving an instruction to output the response in accordance with an input to an input unit.

9. A control method comprising:
controlling a presentation unit such that a response is presented in accordance with an input to an input unit.
